# EUROPÄISCHE PATENTSCHRIFT

(11) **EP 2 444 320 B1**
(45) Veröffentlichungstag und Bekanntmachung des Hinweises auf die Patenterteilung: **27.06.2018**
(21) Anmeldenummer: 11185941.9
(22) Anmeldetag: 20.10.2011
(51) Int. Cl.: B64D 9/00

(54) **Frachtladesystem und Verfahren zum Ermitteln einer Bewegung eines Frachtstücks auf einem Frachtdeck**
Freight loading system and method for detecting a movement of an item of freight on a freight deck
Système de charge de cargaison et procédé de détermination du mouvement d'une pièce de cargaison sur un toit de cargaison

(30) Priorität: 25.10.2010 DE 102010060145; 15.02.2011 DE 102011000743
(43) Veröffentlichungstag der Anmeldung: 25.04.2012
(73) Patentinhaber: Telair International GmbH, 83714 Miesbach (DE)
(72) Erfinder: Huber, Thomas, 83727 Schliersee (DE); Holzner, Richard, 83071 Stephanskirchen (DE)
(74) Vertreter: Bohnenberger, Johannes

(56) Entgegenhaltungen:
- EP-A1- 1 378 443
- EP-A2- 0 937 643
- WO-A1-2004/098995
- WO-A2-2010/127733
- DE-C1- 10 158 298
- US-A1- 2009 121 084

## Beschreibung

Die Erfindung betrifft ein Frachtladesystem für das Be- und Entladen eines Frachtdecks sowie ein Verfahren zur Ermittlung einer Bewegung eines Frachtstücks auf einem Frachtdeck eines Flugzeugs sowie zur Ausrichtung mindestens einer Frachtfördereinrichtung.

Zum Transport von Luftfracht werden die zu transportierenden Frachtstücke, insbesondere Container oder Paletten, die vorzugsweise nach bestimmten Normen gefertigt sind, innerhalb des Frachtraums mittels Riegelelementen am Frachtdeck des Frachtraums befestigt. Derartige Riegelelemente bilden häufig Frachtladebahnen aus, zwischen denen die genormten Frachtstücke positioniert werden können. Um die Frachtstücke an den für sie vorgesehenen Positionen zu positionieren, werden Frachtladesysteme verwendet, die das Bodenpersonal beim Be- und Entladen unterstützen. Die Frachtladesysteme sollen den Be- und Entladevorgang beschleunigen. Des Weiteren sollten die Frachtladesysteme sehr einfach zu bedienen sein, da das Bodenpersonal häufig keine Einweisung bezüglich eines spezifischen Frachtladesystems genossen hat. Hinzu kommt, dass sowohl das Be- als auch das Entladen unter hohem Zeitdruck geschieht, wodurch es leicht zu Fehlbedienungen kommen kann.

Ein defektes Frachtladesystem, sei es aufgrund einer Fehlbedienung oder aufgrund einer natürlichen Abnutzung, kann zu erheblichen Kosten führen, da das Unterhalten von Großraumflugzeugen sehr teuer ist. Jede Minute, die ein Großraumflugzeug auf dem Boden verbringt, kostet den Betreiber Geld.

Häufig werden Frachtstücke auf einem Frachtdeck verladen, die derartige Abmessungen haben, dass es notwendig ist, die Frachtstücke, insbesondere im Bereich nahe der Tür zu drehen. Der Bereich nahe der Tür - man spricht hier auch vom Be- und Entladebereich - ist hierfür mit besonderen Funktionselementen, umfassend Frachtfördereinrichtungen (z.B. PDUs, Power Drive Units) und Rollenmatten ausgestattet. Es gibt unterschiedliche Strategien, wie das Drehen der Frachtstücke in dem räumlich stark beschränkten Be- und Entladebereich bewerkstelligt wird. Entsprechende Frachtladesysteme zum Drehen von Frachtstücken sind aus der US 4,050,655, DE 10 2005 008 443 B4, DE 10 2005 021 078 B4, DE 10 2008 052 468 A1 und DE 101 58 298 C1 bekannt. Es hat sich gezeigt, dass unabhängig von der verwendeten Strategie beim Drehen der Frachtstücke auf dem Frachtdeck die verwendeten Frachtfördereinrichtungen einem starken Verschleiß unterliegen. Des Weiteren benötigt der Vorgang sehr viel Zeit.

Bei einer konstruktiven Betrachtung der an dieser Stelle verwendeten Frachtladesysteme stellt es sich heraus, dass der Be- und Entladebereich sehr aufwändig ausgestaltet werden muss. So werden an dieser Stelle häufig Frachtfördereinrichtungen mit sehr großen Abmessungen verwendet, die eine gesonderte Abdichtung benötigen.

Die WO 2004/098995 beschreibt eine Frachtfördereinrichtung, die auf einem Drehteller gelagert ist, wobei die Frachtfördereinrichtung mit einer Antriebsrolle und einer Vielzahl von Sensoren ausgestattet ist. Diese Sensoren sind dazu ausgebildet, eine Überdeckung der Frachtfördereinrichtung durch ein Frachtstück, beispielsweise einen Container, anzuzeigen, so dass die Rolle zum richtigen Zeitpunkt angehoben werden kann.

Die EP 1 378 443 A1 beschreibt ein Frachtdeck, auf dem eine Vielzahl von Frachtfördereinrichtungen statisch angeordnet sind. D. h. die Frachtfördereinrichtungen lassen sich ihrerseits nicht ausrichten bzw. drehen. Das Frachtdeck der EP 1 378 443 A1 verfügt weiterhin über mehrere mechanische Sensoren, die die Anwesenheit eines Frachtstücks auf dem Frachtdeck detektieren können. Die Sensoren sind derart angeordnet, dass bestimmte Positionen des Frachtstücks erfasst werden können.

Ausgehend von der EP 1 378 443 A1 ist es Aufgabe der vorliegenden Erfindung, ein verbessertes Frachtladesystem für das Be- und Entladen eines Flugzeugdecks anzugeben.

Die Aufgabe wird durch ein Frachtladesystem gemäß dem Anspruch 1 sowie ein Verfahren gemäß dem Anspruch 18 gelöst.

Ein wesentlicher Gedanke der vorliegenden Erfindung besteht also darin, die Bewegung des auf dem Frachtdeck geförderten Frachtstücks zu erfassen und die gewonnenen Informationen dazu zu verwenden, das Frachtstück kontrolliert und effizient zu fördern. Bei herkömmlichen Frachtladesystemen versucht man, das Frachtstück durch das geeignete Ansteuern von Frachtfördereinrichtungen entlang vorgegebener Bewegungsbahnen zu bewegen. Abweichungen beispielsweise aufgrund der Ausgangsposition bleiben bei der Ansteuerung der Frachtfördereinrichtungen stets unberücksichtigt, so dass es mitunter zu einem starken Verschleiß kommt.

Die vorliegende Erfindung erfasst die tatsächliche Bewegung des Frachtstücks und verwendet die Informationen, um das Frachtstück optimal im Frachtraum des Flugzeugs zu verladen.

Die Informationen können einerseits dazu verwendet werden, um die Rollen passiv nachzuregeln, um so den Verschleiß der Rollen zu reduzieren. Andererseits können die Informationen auch zur Umsetzung einer aktiven Steuerstrategie verwendet werden, wobei eine tatsächliche Relativbewegung des Frachtstücks mit einer Sollförderrichtung verglichen wird, so dass anhand zumindest dieser Parameter eine Optimalförderrichtung ermittelt werden kann.

Die mindestens eine Rolle der ersten Frachtfördereinrichtung, die vorzugsweise aus einer Ruheposition in eine Antriebsposition zum Fördern des Frachtstücks verschwenkbar ist, kann kraftschlüssig an einem Abschnitt des Frachtstücks anliegen, um das Frachtstück anzutreiben. Aus dem Stand der Technik sind Verfahren zum Be- und Entladen von Frachtstücken bekannt, bei denen die Frachtfördereinrichtungen zwischen einer abgesenkten Ruheposition und einer aufgestellten Antriebsposition verschwenkbar sind, wobei in der Antriebsposition der Rolle kraftschlüssig an dem Frachtstück anliegt. Um die Förderrichtung des Frachtstücks zu verändern, wird häufig das Frachtstück gestoppt, die Rollen der Frachtfördereinrichtungen abgesenkt, deren Ausrichtung korrigiert und dann die Antriebsposition wieder eingenommen, so dass das Frachtstück in eine andere Richtung transportiert werden kann. Dieser Vorgang ist sehr aufwändig. Die vorliegende Erfindung schlägt vor, eine kontinuierliche Richtungsänderung vorzunehmen, bei der die Rolle der ersten Frachtfördereinrichtung zumindest zeitweise während der Ausrichtung kraftschlüssig am Frachtstück anliegt. Vorzugsweise wird die Ausrichtung der Rolle unter ständiger Aufrechterhaltung des Kraftschlusses vorgenommen.

Vorzugsweise sind die Antriebsrollen möglichst nahe an einer Rotationsachse der Frachtfördereinrichtung angeordnet, so dass bei einer Neuausrichtung dieser - möglicherweise unter Kraftschluss - eine möglichst geringe Reibung auftritt.

Vorzugsweise sind die Rollen der Frachtfördereinrichtungen derart angeordnet, dass ihre Achsen senkrecht zur Rotationsachse der jeweiligen Frachtfördereinrichtung stehen.

Vorzugsweise erfolgt eine Neuausrichtung der Rollen während des Antreibens dieser, insbesondere in Echtzeit.

Die Steuerung kann eine Speichereinrichtung umfassen, die Daten bezüglich der Positionen der Sensoren zueinander und/oder auf dem Frachtdeck (Absolutpositionen) speichert, wobei die Steuerung dazu ausgebildet ist, die Relativbewegung des Abschnitts des Frachtstücks unter Verwendung und/oder Berücksichtigung der Daten der Speichereinrichtung zu berechnen. Im Endeffekt ist es hilfreich, wenn die Steuerung die Relativpositionen der einzelnen Sensoren und/oder Frachtfördereinrichtungen, die die Sensoren umfassen, kennt, so dass die Signale von den Sensoren einem bestimmten Ort bzw. einer bestimmten Position zugeordnet werden können. Hierdurch kann es der Steuerung ermöglicht werden, festzustellen, welche Abschnitte des Frachtdecks von einem bestimmten Frachtstück überdeckt werden, so dass sich zumindest eine grobe Position des Frachtstücks ableiten lässt.

Die Steuerung ist dazu ausgebildet, eine Abmessung einer Bodenfläche des Frachtstücks zu erfassen und für eine Bestimmung der Position des Frachtstücks zu verarbeiten. Es ist möglich, die Bewegung des Frachtstücks durch das Vorsehen von aufwändigen Sensormitteln zu erfassen. Vorzugsweise wird auf derartige aufwändige Sensormittel jedoch verzichtet, wobei die Steuerung Zusatzinformationen beispielsweise in Form der Abmessung der Bodenfläche des Frachtstücks verwendet, um möglichst genaue Ergebnisse zu erzielen.

Beispielsweise können die Sensoren Lichtsensoren umfassen, die derart am Frachtdeck angeordnet und ausgebildet sind, dass sie zumindest das Vorhandensein des Frachtstücks, das den Sensor überfährt, erfassen. Derartige Sensoren sind in dem Fachgebiet hinreichend bekannt und sehr robust, so dass sie den rauen Bedingungen, die in einem Frachtladeraum auftreten, lange widerstehen. Die Lichtsensoren können derart angeordnet und ausgebildet sein, dass sie den Bereich unmittelbar oberhalb des Lichtsensors erfassen und ermitteln können, ob in diesem Bereich ein Teil des Frachtstücks ist. Insofern kann der Sensor feststellen, wenn er von einem Frachtstück überfahren wird. Andere Sensormittel, beispielsweise mechanische Sensormittel, sind denkbar.

Zumindest eine Teilmenge der Sensoren ist in einem das Frachtdeck in seiner Breite überspannenden Raster, vorzugsweise im Be- und Entladebereich des Frachtdecks, angeordnet. Vorzugsweise werden also die Sensoren, insbesondere die Lichtsensoren, flächig über einen Teilbereich, vorzugsweise den Be- und Entladebereich des Frachtdecks verteilt, so dass an verschiedenen Punkten des Frachtdecks festgestellt werden kann, ob sich hier ein Teilabschnitt des Frachtstücks befindet. Insofern können die Sensoren dazu verwendet werden, die Position des Frachtstücks zu einem bestimmten Zeitpunkt zu ermitteln.

Zumindest eine Teilmenge der Frachtfördereinrichtungen kann jeweils mindestens einen Sensor, vorzugsweise mindestens vier Sensoren, zur Erfassung der Frachtstücke umfassen.

Zumindest eine Teilmenge der Frachtfördereinrichtungen kann jeweils mindestens einen Sensor umfassen, der statisch relativ zum Frachtdeck, insbesondere jeweils an einem Rahmen der Frachtfördereinrichtungen, angeordnet ist. Die Frachtfördereinrichtungen können bewegliche Teile umfassen, die sich beispielsweise bei der Neuausrichtung der Rolle bewegen. Die Positionsbestimmung des Frachtstücks kann vereinfacht werden, wenn die Sensoren zueinander in einer fest vorgegebenen Position, insbesondere statisch, angeordnet sind. Insofern können die einzelnen Positionen der Sensoren einmal in die Steuerung eingegeben werden und bleiben danach konstant. Es ist nicht notwendig, die Positionen der Sensoren in Abhängigkeit von der Ausrichtung der Frachtfördereinrichtungen zu berechnen.

Die von den Sensoren empfangenen Signale können also ein Überdeckungsmuster angeben, wobei es dieses Überdeckungsmuster der Steuerung ermöglicht, festzustellen, welche der Sensoren von einem Frachtstück überdeckt werden. Bei Lichtsensoren wäre es beispielsweise möglich, einen Grad der Verdunklung anzugeben. Vorzugsweise handelt es sich bei dem Überdeckungsmuster um ein binäres Überdeckungsmuster, das unmittelbare Rückschlüsse auf die Überdeckung ("0" bedeutet, dass der entsprechende Sensor durch das Frachtstück überdeckt wird; "1" bedeutet, dass der entsprechende Sensor von keinem Frachtstück überdeckt wird) liefert.

Insofern können die Sensoren den einzelnen Frachtfördereinrichtungen zugeordnet sein. Vorzugsweise können diese Sensoren dazu eingesetzt werden, um festzustellen, ob sich ein Abschnitt des Frachtstücks oberhalb der mindestens einen Rolle der Frachtfördereinrichtung befindet, so dass das Aufbringen von einer Förderkraft mittels der Rolle möglich ist. Insofern haben die Sensoren eine Doppelfunktion. Zum einen dienen sie dazu, um lokal zu bestimmen, ob eine bestimmte Frachtfördereinrichtung zum Fördern des Frachtstücks eingesetzt werden kann. Zum anderen ist der Sensor ein Teil einer Gruppe von Sensoren, die gemeinsam das Bestimmen der Position und/oder eine Bewegung des Frachtstücks ermöglichen.

Vorzugsweise werden in dem oben genannten Ausführungsbeispiel die Frachtfördereinrichtungen in einem, insbesondere regelmäßigen, Raster angeordnet. Dieses Raster kann das Frachtdeck vorzugsweise im Be- und Entladebereich über dessen gesamte Breite überspannen. Ebenso kann eine regelmäßige Anordnung in Längsrichtung erfolgen. Vorzugsweise handelt es sich also bei dem durch die Frachtfördereinrichtungen gebildeten Raster um ein im Wesentlichen gleichmäßiges Raster.

Vorzugsweise sind die Sensoren insbesondere zur Sicherstellung der erstgenannten Funktion an der jeweiligen Frachtfördereinrichtung, die mindestens eine Rolle umgebend angeordnet.

Zumindest eine Teilmenge der Frachtfördereinrichtungen kann, wie bereits dargestellt, in einem Raster, vorzugsweise im Be- und Entladebereich des Frachtdecks angeordnet sein. Vorzugsweise wird hier eine Vielzahl von Frachtfördereinrichtungen angeordnet, die einen effektiven Transport des Frachtstücks gewährleisten. Aufgrund der exakten Steuerung der einzelnen Frachtfördereinrichtungen, ist es nicht mehr notwendig, wie im Stand der Technik beschrieben, einzelne sehr kräftige Frachtfördereinrichtungen bereitzustellen. Vielmehr können mehrere kleine Frachtfördereinrichtungen die Funktionen der großen Frachtfördereinrichtungen übernehmen. Vorzugsweise weisen diese kleineren Frachtfördereinrichtungen eine geringe Bauhöhe, beispielsweise kleiner als 10 cm, insbesondere kleiner als 5 cm (2 Inch) auf. Derartige Frachtfördereinrichtungen können im Frachtraum vorgesehen werden, ohne dass es notwendig ist, zusätzliche Drainagewannen unter jeder Frachtfördereinrichtung vorzusehen. Aufgrund der geringen Bauhöhe der Frachtfördereinrichtungen, die ohne große Modifikationen des Frachtdecks eingebaut werden können, werden Gewicht und Kosten gespart. Die Dichtigkeit des Frachtbodens bleibt unbeeinflusst und mögliche Interferenzen mit unter dem Boden liegenden Strukturen oder Systemen werden vermieden.

Das erfindungsgemäße Raster von Frachtfördereinrichtungen umfasst vorzugsweise mindestens 6, besser noch mindestens 12 Frachtfördereinrichtungen.

Die mindestens eine Frachtfördereinrichtung kann mindestens einen Drehteller umfassen, der um eine Vertikalachse drehbar in einem Rahmen angeordnet ist und die mindestens eine Rolle beherbergt, um die Rolle zur Förderung des Frachtstücks in eine vorgegebene Förderrichtung einzustellen. Die mindestens eine Rolle der Frachtfördereinrichtung ist also derart drehbeweglich gelagert, dass sich diese innerhalb einer Ebene, die im Wesentlichen parallel zu dem Frachtdeck verläuft, rotieren lässt. Insofern ist es möglich, einen beliebigen Winkel einzustellen, so dass Frachtstücke in jede beliebige Richtung gefördert werden können.

Vorzugsweise sind die Sensoren der jeweiligen Frachtfördereinrichtung am Rahmen angeordnet, so dass diese beim Verschwenken der Rollen stillstehen. Die Position der Sensoren verändert sich also nicht, so dass die Steuerung anhand dieser effektiv die Position des Frachtstücks feststellen kann.

Es können weitere Sensoren an der Frachtfördereinrichtung, insbesondere am Rahmen, vorgesehen werden. Beispielsweise kann es sich hierbei um einen Temperatursensor, insbesondere einen Infrarotsensor, handeln. Dieser Temperatursensor kann die Temperatur des Antriebsmotors und/oder der Bremse und/oder der Platinen überwachen. Zusätzlich kann dieser Temperatursensor derart angeordnet und ausgestaltet sein, dass sich durch diesen eine Temperatur der vorbeifahrenden Frachtstücke erfassen lässt, um so einen möglichen Brand der Fracht rechtzeitig zu erfassen. Die Temperatursensoren können mit der Steuerung in kommunikativer Verbindung stehen, so dass die gewonnene Information weitergegeben werden kann. Beispielsweise wäre es denkbar, ein entsprechendes Warnsystem im Cockpit oder in einer Bodenstation vorzusehen. Die Warnung kann per akustischem und/oder visuellem Signal (z.B. durch eine Hupe und/oder ein Warnlicht) erfolgen.

Das Frachtladesystem kann eine Leseeinrichtung, insbesondere ein RFID-Lesegerät, zum Erfassen der Frachtstückart und/oder mindestens einer Abmessung, vorzugsweise einer Abmessung einer Bodenfläche, des Frachtstücks umfassen. Insofern ist es möglich, beim Einfahren des Frachtstücks Informationen bezüglich des Frachtstücks zu erfassen, so dass diese Informationen bei der Positionsbestimmung des Frachtstücks innerhalb des Frachtdecks berücksichtigt werden können.

Die Leseeinrichtung kann zusätzlich oder alternativ Informationen bezüglich der Palettengröße, des Gewichts, des Zielorts und/oder eine 2-D- oder 3-D-Kontur erfassen. Diese Daten können in einem RFID-Chip, welcher vorzugsweise in das Frachtstück integriert ist oder an der Ladung hängt, hinterlegt sein. Vorzugsweise befindet sich die Leseeinrichtung in einem Tür- oder Eingangsbereich des Flugzeugdecks, um vorzugsweise die Daten eines in das Flugzeug hineinfahrenden Frachtstücks zu erfassen.

Vorzugsweise umfasst die Steuerung einen Modellgenerator, um ein zumindest zweidimensionales, vorzugsweise dreidimensionales Modell des Frachtstücks und/oder zumindest eines Teils des Frachtraums des Flugzeugs zu erstellen. Anhand des erstellten Modells ist es möglich, die Position des Frachtstücks auf dem Frachtdeck exakt zu bestimmen. Das Modell des Frachtraums kann dazu verwendet werden, das Frachtstück automatisch innerhalb des Frachtraums zu verfahren, ohne dass es zu einer Kollision mit Elementen des Frachtraums oder der Hülle des Flugzeuges kommt.

Die Steuerung kann eine Positionsspeichereinrichtung umfassen, um Positionsdaten in einer zeitlichen Abfolge zu speichern, die die Position des Frachtstücks auf dem Frachtdeck angeben, wobei die Steuerung dazu ausgebildet ist, anhand einer ermittelten Ist-Position und der gespeicherten Positionsdaten aus der Positionsspeichereinrichtung die Bewegung des Frachtstücks zu ermitteln. Wie bereits vorab erläutert werden vorzugsweise Sensoren verwendet, die lediglich zur Positionsbestimmung geeignet sind. Durch das Speichern einzelner Positionen in zeitlicher Abfolge, kann die Bewegung des Frachtstücks bestimmt werden. Vorzugsweise wird hierfür ein entsprechendes Modell generiert, so dass auch zukünftige Positionen vorhergesagt werden können. Der Steuerung kann es ermöglicht werden, sämtliche Informationen zu verarbeiten, um die Bewegung des Frachtstücks zu bestimmen. Beispielsweise können auch Steuersignale für die Frachtfördereinrichtungen berücksichtigt werden.

Die Steuerung kann dazu ausgebildet sein, eine Soll-Position und eine Ist-Position des Frachtstücks zu ermitteln und mindestens eine Frachtfördereinrichtung derart anzusteuern, dass das Frachtstück aus der Ist-Position in die Soll-Position gefördert wird. Die Steuerung implementiert also vorzugsweise einen automatischen Fördervorgang des Frachtstücks.

Die Steuerung kann dazu ausgebildet sein, anhand der Ist-Position und der Soll-Position eine Soll-Förderrichtung für mindestens eine Frachtfördereinrichtung zu ermitteln. Die Frachtfördereinrichtung kann als Steuerfrachtfördereinrichtung bezeichnet werden.

Die Steuerung kann dazu ausgebildet sein, vorzugsweise in Echtzeit, die Relativbewegung des Frachtstücks nahe bei oder an der Position, an der die mindestens eine Rolle der ersten Frachtfördereinrichtung angreift, und eine Soll-Förderrichtung zu ermitteln. Vorzugsweise wird die Rolle unter Berücksichtigung der Relativbewegung des Frachtstücks und der Soll-Förderrichtung ausgerichtet. Insofern kann die Steuerung eine Abwägung unternehmen, bei der zum einen die geplante Förderrichtung und zum anderen der Abrieb der Rolle berücksichtigt wird.

Die Steuerung kann dazu ausgebildet sein, anhand der Ist-Position und der Soll-Position eine Sollförderrichtung für mindestens eine Frachtfördereinrichtung, insbesondere die Steuerfördereinrichtung, zu ermitteln.

In diesem Zusammenhang kann die Steuerung ebenfalls dazu ausgebildet sein, unter Berücksichtigung der Relativbewegung eine Optimalförderrichtung für mindestens eine Frachtfördereinrichtung, insbesondere die Steuerfrachtfördereinrichtung, zu ermitteln, wobei beim Einnehmen der Optimalförderrichtung die Achse der Rolle der jeweiligen Frachtfördereinrichtung im Wesentlichen senkrecht zur Relativbewegung des auf der Rolle aufliegenden Frachtstücks verläuft.

Des Weiteren kann die Steuerung dazu ausgebildet sein, eine Stellförderrichtung aus der Optimalförderrichtung und der Sollförderrichtung insbesondere als gewichtetes Mittel, zu berechnen und die mindestens eine Frachtfördereinrichtung, insbesondere die Steuerfrachtfördereinrichtung, gemäß der Optimalförderrichtung auszubilden. Bei der tatsächlichen Einstellung der Frachtfördereinrichtungen in eine bestimmte Richtung, beispielsweise die Optimalförderrichtung, ist es notwendig, verschiedene Parameter zu berücksichtigen. Unter anderem kann die tatsächliche Bewegung der Fracht bzw. des Frachtstücks berücksichtigt werden. Des Weiteren kann die beabsichtigte Förderrichtung, beispielsweise die Richtung, in die man ein Frachtstück fördern muss, so dass dieses aus einer Ist-Position in eine Soll-Position gefördert wird, berücksichtigt werden. Weitere Parameter, beispielsweise Trägheit, Drehmoment usw. können in die Berechnung einfließen.

Die eingangs genannte Aufgabe wird des Weiteren durch ein Verfahren zur Ermittlung einer Bewegung eines Frachtstücks nach Anspruch 18 gelöst.

Die Ausrichtung mindestens einer Frachtfördereinrichtung kann unter Berücksichtigung der Bewegung des Frachtstücks, insbesondere der Relativbewegung des Frachtstücks, unmittelbar oberhalb der Frachtfördereinrichtung, durch die Steuerung erfolgen. Vorzugsweise umfasst das erfindungsgemäße Verfahren also ein entsprechendes Ausrichten der Frachtfördereinrichtung unter Berücksichtigung der berechneten Informationen.

Vorzugsweise enthält eine Speichereinrichtung 21 der Steuereinrichtung 20 Positionsdaten der einzelnen Frachtfördereinrichtungen 100, 110, 120, ..., 210, sowie der jeweiligen Sensoreinrichtungen 104a, 104b, 104c, 104d. Diese Daten ermöglichen es der Steuereinrichtung 20 jedem Signal, das sich auf eine Sensoreinrichtung 104a, 104b, 104c, 104d bezieht, einer bestimmten Position auf dem Frachtdeck zuzuordnen. Die Signale geben also ein positionsbezogenes Überdeckungsmuster an.

Auch bei dem erfindungsgemäßen Verfahren werden Sensoren verwendet, um die Bewegung des Frachtstücks zu erfassen. Vorzugsweise geben diese Sensoren lediglich an, ob sich oberhalb dieser ein Abschnitt des Frachtstücks befindet. Die Steuerung kann die entsprechend ausgegebenen Signale verarbeiten, um eine Position des Frachtstücks auf dem Frachtdeck zu ermitteln. Durch das Aufzeichnen dieser Position über einen Zeitraum hinweg können Rückschlüsse bezüglich der Bewegungsbahn des Frachtstücks gezogen werden.

Weitere vorteilhafte Ausgestaltungen ergeben sich anhand der Unteransprüche.

Nachfolgend wird die Erfindung mittels eines Ausführungsbeispiels beschrieben, das anhand von Abbildungen näher erläutert wird.

Hierbei zeigen:
Fig. 1 eine Draufsicht auf einen Abschnitt eines Frachtdecks mit zahlreichen Frachtfördereinrichtungen;
Fig. 2 eine Draufsicht auf eine Frachtfördereinrichtung in einer ersten Position (Stellwinkel 0°);
Fig. 3 die Frachtfördereinrichtung aus Fig. 2 in einer zweiten Position (Stellwinkel 270°);
Fig. 4 die Frachtfördereinrichtung aus Fig. 2 in einer Seitenansicht, wobei sich die Antriebsrollen in einer Ruheposition befinden;
Fig. 5 eine Seitenansicht der Frachtfördereinrichtung aus Fig. 2, wobei sich die Antriebsrollen in einer Antriebsposition befinden;
Fig. 6 eine schematische Darstellung des Frachtladesystems umfassend zahlreiche Sensoren und Aktuatoren; und
Fig. 7 eine schematische Darstellung eines Frachtstücks.

In der nachfolgenden Beschreibung werden für gleiche und gleich wirkende Teile dieselben Bezugsziffern verwendet.

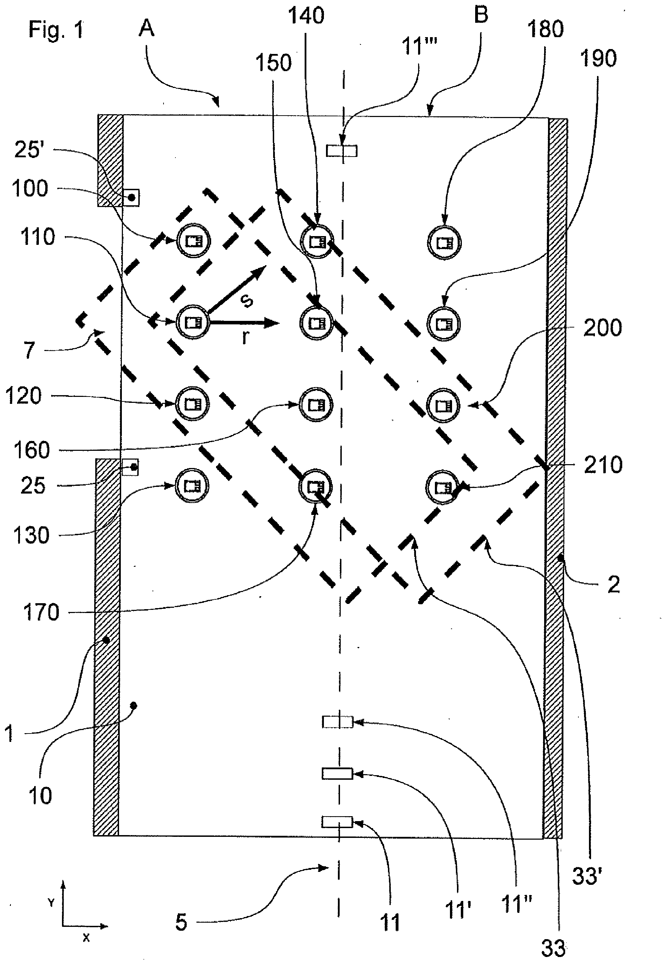

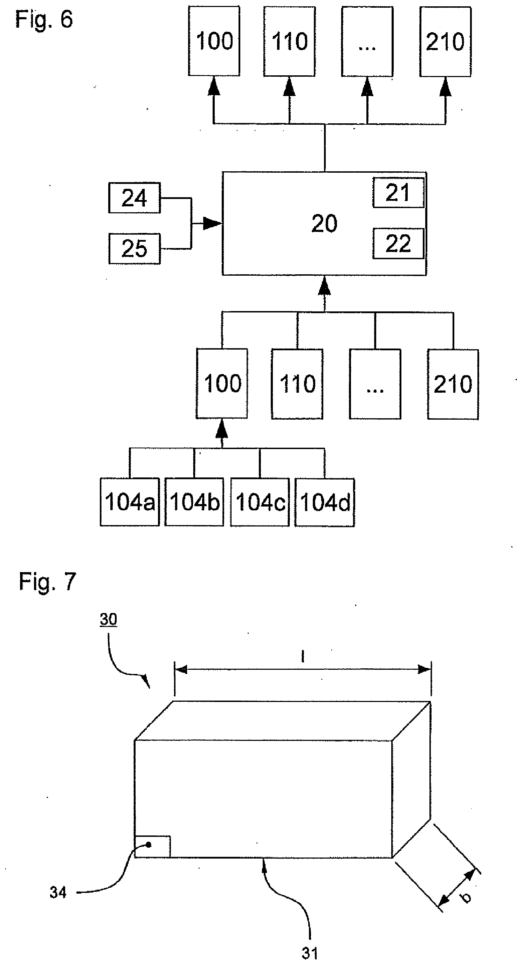

Die Fig. 1 zeigt eine Draufsicht auf ein Frachtdeck 10 mit einem erfindungsgemäßen Frachtladesystem. Der gezeigte Abschnitt des Frachtdecks 10 ist im Wesentlichen rechteckig und erstreckt sich in der x-y-Ebene (die y-Richtung entspricht der Längsrichtung des Flugzeugs und die x-Richtung der Querrichtung) des Flugzeugs und ist durch eine linke Seitenwand 1 und eine rechte Seitenwand 2 begrenzt. Die linke Seitenwand 1 ist abschnittsweise zur Bildung einer Türöffnung 7 unterbrochen. Durch diese Türöffnung 7 kann ein Frachtcontainer 30, wie dieser in Fig. 7 gezeigt wird, in den Frachtraum eingebracht werden. Das erfindungsgemäße Frachtladesystem ist besonders dafür geeignet, sperrige Container, die zur Verstauung innerhalb des Frachtraums gedreht werden müssen, zu transportieren. Das Frachtladesystem kann jedoch in Verbindung mit deutlich kleineren Frachtcontainern 30 mit beliebigen Abmessungen verwendet werden. Der in Fig. 7 gezeigte Frachtcontainer 30 hat eine Länge I, die deutlich länger ist als die Breite des in Fig. 1 gezeigten Frachtdecks 10, so dass der Frachtcontainer 30 beim Verladen im Be- und Entladebereich unter Verwendung des zusätzlichen Platzes, den die Türöffnung 7 bietet, gedreht werden muss.

Das Frachtdeck 10 des in Fig. 1 gezeigten Flugzeugs ist so konfiguriert, dass eine erste Frachtladebahn A und eine zweite Frachtladebahn B zur Aufnahme einzelner Frachtcontainer 30 bereitsteht. Hierfür sind entlang einer Mittelebene 5 des Frachtdecks 10 Mittelriegel 11, 11', 11", 11'" angeordnet. Die Frachtladebahnen A, B haben eine Breite, die im Wesentlichen mit der Breite b des Frachtcontainers 30 korrespondiert. Üblicherweise sind weitere Funktionselemente vorgesehen, um die Frachtcontainer 30 in geeigneter Weise in den Frachtladebahnen A, B zu halten.
Der Be- und Entladebereich des Frachtdecks 10 der Fig. 1 ist mit 12 Frachtfördereinrichtungen 100, 110, 120, ..., 210 ausgestattet. Diese Frachtfördereinrichtungen 100, 110, 120, ..., 210 sind über den Be- und Entladebereich verteilt. Vorzugsweise sind die Frachtfördereinrichtungen 100, 110, 120, ..., 210 so über den Be- und Entladebereich verteilt, dass ein zu verladender Frachtcontainer 30 mit einem Frachtbodenumriss 33, 33' unabhängig von seiner Position stets mindestens zwei vorzugsweise mindestens drei Frachtfördereinrichtungen 100, 110, 120, ..., 210 überdeckt. In der in Fig. 1 gezeigten Konfiguration sind die Frachtfördereinrichtungen 100, 110, 120, ..., 210 in einem Raster angeordnet, das eine Vielzahl von Zeilen (in x-Richtung) und Spalten (in y-Richtung) umfasst. Jede Zeile der in Fig. 1 gezeigten Konfiguration umfasst drei Frachtfördereinrichtungen 100, 110, 120, ..., 210 und jede Spalte vier Frachtfördereinrichtungen 100, 110, 120, ..., 210.

Es sollte für den hier tätigen Fachmann offensichtlich sein, dass eine beliebige andere Verteilung der Frachtfördereinrichtungen 100, 110, 120, ..., 210 gewählt werden kann, um eine flächige Abdeckung des Be- und Entladebereichs zu erreichen. So können vier, fünf, sechs, acht oder deutlich mehr Frachtfördereinrichtungen in jeder Spalte oder in jeder Zeile verbaut werden. Des Weiteren ist es möglich, die Frachtfördereinrichtungen 100, 110, 120, ..., 210 in symmetrischen und asymmetrischen Konfigurationen anzuordnen, so dass die speziellen Anforderungen des jeweiligen Frachtraums erfüllt werden. Die in Fig. 1 gewählte regelmäßige Konfiguration hat den Vorteil, dass sich die einzelnen Positionen der Frachtfördereinrichtungen 100, 110, 120, ..., 210 auf dem Frachtdeck 10 leicht erfassen lassen. Dennoch wäre es theoretisch auch möglich, ein beliebiges Netz aus Frachtfördereinrichtungen 100, 110, 120, ..., 210 zur Ausstattung des Be- und Entladebereichs zu verwenden und die entsprechenden Positionen zu erfassen.

Wechselseitig zur Türöffnung 7 sind RFID-Leseeinrichtungen 25, 25' angeordnet, die ein RFID-Tag 34 am Frachtcontainer 30 (vgl. Fig. 7) erfassen können. Insofern ist es einer mit den RFID-Leseeinrichtung 25, 25' verbundenen Steuereinrichtung 20 möglich, einen einfahrenden Frachtcontainer 30 eindeutig zu identifizieren. Eine gewonnene Identifikationsnummer kann dazu verwendet werden, die Frachtcontainerbreite b und die Frachtcontainerlänge I - also die Abmessungen - des Frachtcontainers 30 zu bestimmen. Alternativ kann das RFID-Tag 34 konkrete Informationen bezüglich dieser Abmessungen umfassen. In einem weiteren Ausführungsbeispiel kann ein Laserscanner an der Türöffnung 7 oder an einer beliebigen anderen geeigneten Position angeordnet sein, um die Abmessungen des einfahrenden Frachtcontainers 30 zu bestimmen.

Die Frachtfördereinrichtungen 100, 110, 120, ..., 210 sind dazu ausgebildet, den einfahrenden Frachtcontainer 30 zu transportieren und in eine vorgegebene Position innerhalb der Frachtladebahnen A, B zu verschieben. In der Fig. 1 sind Frachtbodenumrisse 33, 33' schematisch dargestellt. Es zeigt sich, dass der bereits leicht quergestellte Frachtcontainer 30 bezüglich des ersten Frachtbodenumrisses 33 entlang der x-Achse mittels der Frachtfördereinrichtungen 100, 110, 120, ..., 210 verschoben wurde, um die durch den zweiten Frachtbodenumriss 33' verdeutlichte Position einzunehmen. Bei den verwendeten Frachtfördereinrichtungen 100, 110, 120, ..., 210 kann es sich beispielsweise um solche handeln, wie diese in der DE 198 07 229 A1 beschrieben sind. Vorzugsweise werden jedoch Frachtfördereinrichtungen 100, 110, 120, ..., 210 verwendet, die eine sehr geringe Bauhöhe haben, so dass deren Installation mit einem sehr geringen Aufwand betrieben werden kann. Aufgrund der erfindungsgemäßen Steuerung des Frachtladesystems ist es möglich, die gezeigte Vielzahl von Frachtfördereinrichtungen 100, 110, 120, ..., 210 derart parallel nebeneinander zu betreiben, dass die einzelnen Frachtfördereinrichtungen 100, 110, 120, ..., 210 deutlich weniger Kraft aufbringen müssen. Insofern lassen sich die gewünschten Baumaßnahmen ohne Weiteres umsetzen.

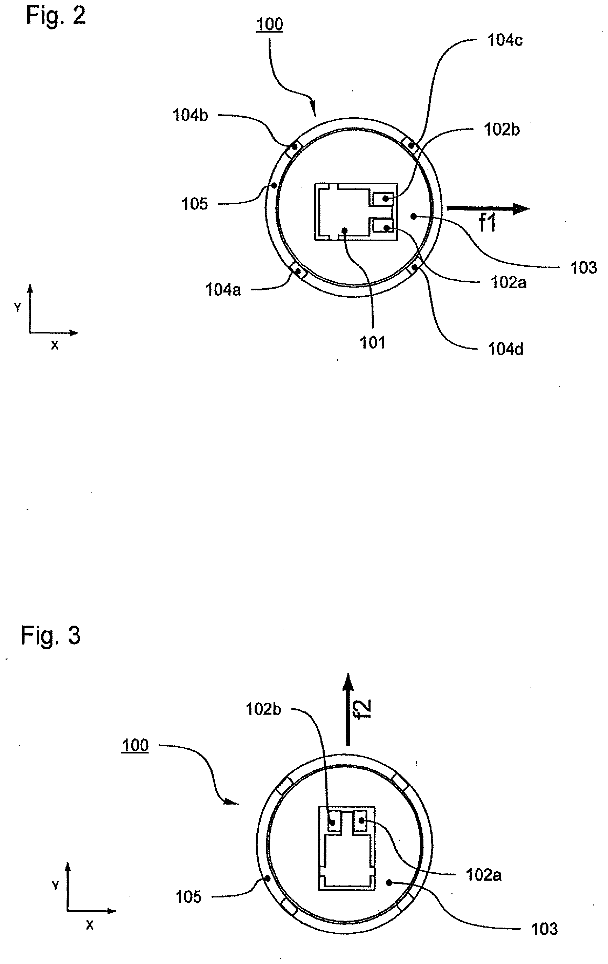

Nachfolgend werden bevorzugt verwendete Frachtfördereinrichtungen 100, 110, 120, ..., 210 anhand der Fig. 2 bis 5 näher erläutert. Die Fig. 2 bis 5 zeigen exemplarisch Detailansichten der Frachtfördereinrichtung 100. Die Frachtfördereinrichtung 100 hat einen ringförmigen Rahmen 105 und einen kreisförmigen, im Rahmen 105 angeordneten Rotationsteller 103. Der Rotationsteller 103 ist derart drehbeweglich innerhalb des Rahmens 105 gelagert, dass sich dieser in der x-y-Ebene um eine Rotationsachse 106 drehen lässt. Die Frachtfördereinrichtung 100 weist entsprechende Aktuatoren und Sensoren auf, so dass der Rotationsteller 103 innerhalb des Rahmens 105 beliebig ausgerichtet werden kann. Die Sensoren geben Aufschluss über die Ausrichtung des Rotationstellers 103 innerhalb des Rahmens 105. Die Fig. 2 und 3 zeigen zwei sich unterscheidende Ausrichtungen des Rotationstellers 103.

Der Rotationsteller 103 beherbergt eine Rollenantriebseinheit 101, die Antriebsrollen 102a, 102b antreibt. Die Antriebsrollen 102a, 102b sind dazu ausgebildet, Frachtstücke 30 in eine Richtung quer zur Drehachse der Antriebsrollen 102a, 102b im Wesentlichen innerhalb der x-y-Ebene anzutreiben. Die Fig. 2 zeigt die Frachtfördereinrichtung 100, wobei diese derart ausgerichtet ist, dass sie die Fracht in eine erste Förderrichtung f1 transportieren kann. Es sollte für den hier tätigen Fachmann offensichtlich sein, dass sich die Frachtstücke 30 durch ein Antreiben der Antriebsrollen 102a, 102b in eine entgegengesetzte Drehrichtung in die entgegengesetzte Richtung antreiben lässt. Die in Fig. 2 gezeigte Ausrichtung wird als Grundstellung bezeichnet und entspricht im Weiteren einer Null-Grad-Ausrichtung. Demgegenüber ist der Rotationsteller 103 der Frachtfördereinrichtung 100 in der Fig. 3 um 90 Grad verdreht (Stellwinkel 270°), so dass nun eine Förderung von Frachtcontainern 30 in die zweite Förderrichtung f2 möglich ist.

Die bevorzugte Frachtfördereinrichtung 100 umfasst des Weiteren vier Sensoreinrichtungen 104a, 104b, 104c, 104d, die an dem Rahmen 105 angeordnet sind. Insofern beeinflusst die Ausrichtung des Rotationstellers 103 die Position der Sensoreinrichtungen 104a, 104b, 104c, 104d nicht. Vorzugsweise sind die Sensoreinrichtungen 104a, 104b, 104c, 104d jeweils auf der gegenüberliegenden Seite des Rahmens 105 angeordnet. So befindet sich die erste Sensoreinrichtung 104a im 45-Grad-Bereich der Frachtfördereinrichtung 100, die zweite Sensoreinrichtung 104b im 135-Grad-Bereich, die dritte Sensoreinrichtung 104c im 225-Grad-Bereich und die vierte Sensoreinrichtung 104d im 315-Grad-Bereich. Die Sensoreinrichtungen 104a, 104b, 104c, 104d sind Lichtsensoren, die lichtemittierende Dioden und Photodioden umfassen, so dass die Sensoreinrichtungen 104a, 104b, 104c, 104d dazu geeignet sind, das Vorhandensein eines Frachtstücks unmittelbar oberhalb der Sensoreinrichtungen 104a, 104b, 104c, 104d zu detektieren.

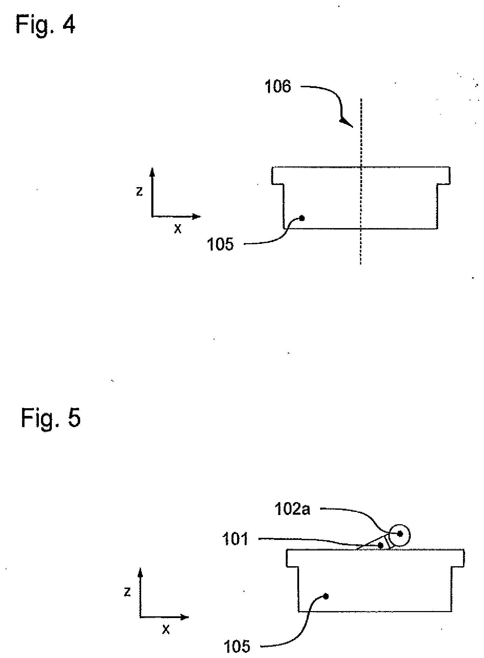

Wie in Fig. 4 und 5 gezeigt, ist die Frachtfördereinrichtung 100 dazu ausgebildet, die Antriebsrollen 102a, 102b aus einer Ruhestellung in eine Antriebsstellung (Fig. 5) zu verschwenken. In der Ruhestellung werden die Antriebsrollen 102a, 102b innerhalb des Rotationstellers 103 versenkt, so dass diese nicht über den Rahmen 105 hinausragen. In der Antriebsstellung ragen die Antriebsrollen 102a, 102b über den Rahmen 105 hinaus und können Frachtstücke antreiben. Die Verschwenkung zwischen der Ruheposition und der Antriebsposition ist sinnvoll, um eine Beschädigung der Frachtfördereinrichtung 100 durch eine seitlich an die Antriebsrollen 102a, 102b heranfahrende Fracht zu vermeiden. Auch ist es möglich, durch das Absenken der Antriebsrollen 102a, 102b die Ausrichtung dieser in einer Situation zu verändern, in der ein Frachtstück oder der Frachtcontainer 30 unmittelbar über der Frachtfördereinrichtung 100 steht, ohne dass es zu einem Materialabrieb kommt. Die Sensoreinrichtungen 104a, 104b, 104c, 104d können dazu verwendet werden, um festzustellen, ob ein Ausfahren der Antriebsrollen 102a, 102b aus der Ruhestellung in die Antriebsstellung sinnvoll ist.

Mit den vier Sensoreinrichtungen 104a, 104b, 104c, 104d ist es möglich zu erkennen, ob eine Palette in Querrichtung zur PDU ankommt. Damit kann sichergestellt werden dass die PDU zum Zeitpunkt des seitlichen Überfahrens durch die Ladungseinheit unten ist und erst hoch kommt, wenn die PDU komplett abgedeckt ist (Verhindern von seitlichem Anfahren).

Aufgrund der bereits unter Bezugnahme auf die Fig. 1 beschriebene Anordnung der einzelnen Frachtfördereinrichtungen 100, 110, 120, ..., 210 und der Ausstattung jeder der Frachtfördereinrichtungen 100, 110, 120, ..., 210 mit entsprechenden Sensoreinrichtungen 104a, 104b, 104c, 104d ergibt sich ein Netz von Sensoreinrichtungen 104a, 104b, 104c, 104d, das den Be- und Entladebereich des Frachtdecks 10 relativ engmaschig abdeckt.

Das erfindungsgemäße Frachtladesystem weist die Steuereinrichtung 20 auf, die kommunikativ mit den einzelnen Frachtfördereinrichtungen 100, 110, 120, ..., 210 und den zugehörigen Sensoreinrichtungen 104a, 104b, 104c, 104d verbunden ist, um eine effektive Steuerung der Frachtfördereinrichtungen 100, 110, 120, ..., 210 zu bewerkstelligen.

So macht es sich die vorliegende Erfindung zunutze, dass aufgrund der Vielzahl von vorhandenen Sensoreinrichtungen 104a, 104b, 104c, 104d eine effektive Positionsbestimmung des Frachtcontainers 30 vorgenommen werden kann. Wie in der Fig. 6 gezeigt, empfängt die Steuereinrichtung 20 über die Frachtfördereinrichtungen 100, 110, 120, ..., 210 die einzelnen Signale der jeweiligen Sensoreinrichtungen 104a, 104b, 104c, 104d. Des Weiteren empfängt sie Signale von der RFID-Leseeinrichtung 25, die die Abmessungen des Frachtbodens 31 des Frachtcontainers 30 angeben. Die Steuereinrichtung 20 kennt die Positionen der einzelnen Sensoreinrichtungen 104a, 104b, 104c, 104d und kann somit die Signale bestimmten Positionen auf dem Frachtdeck 10 zuordnen. Für die Steuereinrichtung 20 ergibt sich also ein Überdeckungsmuster, welches angibt, an welcher Stelle eine der Sensoreinrichtungen 104a, 104b, 104c, 104d der Frachtfördereinrichtungen 100, 110, 120, ..., 210 von dem Frachtboden 31 des Frachtcontainers 30 überdeckt wird. Anhand dieser Informationen lässt sich die Position des Frachtcontainers 30 auf dem Frachtdeck 10 relativ genau bestimmen. Betrachtet man beispielsweise die Frachtbodenumrisse 33, die eine erste Position des Frachtcontainers 30 angeben, so zeigt es sich, dass die erste Frachtfördereinrichtung 100, die zweite Frachtfördereinrichtung 110, die dritte Frachtfördereinrichtung 120, die sechste Frachtfördereinrichtung 150, die siebte Frachtfördereinrichtung 160, die achte Frachtfördereinrichtung 170 und die zwölfte Frachtfördereinrichtung 210 vollständig von dem Frachtcontainer 30 verdeckt sind. Insofern können die jeweiligen Sensoreinrichtungen 104a, 104b, 104c, 104d entsprechende Signale an die Steuereinrichtung 20 ausgeben. Da die Steuereinrichtung 20 die Abmessungen des Frachtcontainers 30 kennt, lässt sich innerhalb bestimmter Toleranzen relativ genau die Position des Frachtcontainers 30 ermitteln. Die Speichereinrichtung 21 kann entweder Absolutpositionen der Sensoreinrichtungen 104a, 104b, 104c, 104d der jeweiligen Frachtfördereinrichtungen 100, 110, ..., 210 speichern. Alternativ können relative Positionsangaben vorliegen, die es beispielsweise ermöglichen, die Relativposition der Frachtfördereinrichtung 100 zu der Frachtfördereinrichtung 110 oder 120 zu bestimmen. In einer weiteren alternativen Ausführungsform können sich die Relativpositionen auf die Sensoreinrichtungen 104a, 104b, 104c, 104d beziehen. Beispielsweise kann eine Relativangabe bezüglich der Sensoreinrichtung 104a der Frachtfördereinrichtung 100 zu der Sensoreinrichtung 104a der Frachtfördereinrichtung 110 gespeichert werden. Dem hier tätigen Fachmann sollten zahlreiche weitere Möglichkeiten bekannt sein, wie entsprechende Positionsdaten auf der Speichereinrichtung 21 hinterlegt werden können, so dass es der Steuereinrichtung 20 möglich ist, anhand des Überdeckungsmusters die Position des Frachtcontainers 30 auf dem Frachtdeck 10 zu ermitteln.

Beispielsweise wird mittels eines Modellgenerators 22 ein virtuelles Abbild (zweidimensional oder dreidimensional) erstellt, das in einem virtuellen Modell der Sensoreinrichtungen 104a, 104b, 104c, 104d (hierbei kommt es besonders auf die Positionen der einzelnen Sensoreinrichtungen 104a, 104b, 104c, 104d zueinander an) derart lange verschoben wird bis sich eine virtuelle Konfiguration ergibt, die zu einem Signalmuster führen würde, das dem aktuell vorliegenden Signalen der jeweiligen Sensoreinrichtungen 104a, 104b, 104c, 104d entspricht. Vorzugsweise erzeugt der Modellgenerator 22 nicht nur ein virtuelles Netz der Sensoreinrichtungen 104a, 104b, 104c, 104d, sondern berücksichtigt auch weitere physische Gegebenheiten des Frachtraums (z. B. Seitenbegrenzungen z.B. in Form von den Seitenwänden 1, 2), die Position der Türöffnung 7, vorhandene Funktionselemente z.B. in Form von Riegelelemente, usw.). Vorzugsweise weiß der Modellgenerator 22, dass beim Verladen der Frachtcontainer 30 nur Container mit bestimmten Standardabmessungen (z.B. 88 x 125 Zoll, 96 x 125 Zoll, 196 x 96 Zoll, 238.5 x 96 Zoll etc.) verwendet werden. Die Steuereinrichtung 20 kann diese Information bei der Positionsbestimmung berücksichtigen. Der Modellgenerator 22 kann ein vollständiges dreidimensionales Modell zumindest des Be- und Entladebereichs des Frachtraums erzeugen.

Wird nun der Frachtcontainer angetrieben, so dass sich seine Position wie anhand der zweiten Frachtbodenumrisse 33' erläutert, verändert, so ergibt sich ein neues Überdeckungsmuster der Frachtfördereinrichtungen 100, 110, 120, ..., 210. Es zeigt sich, dass lediglich die zweite Frachtfördereinrichtung 110 die sechste Frachtfördereinrichtung 150, die siebte Frachtfördereinrichtung 160, die elfte Frachtfördereinrichtung 200 und die zwölfte Frachtfördereinrichtung 210 vollständig von dem Frachtcontainer 30 überdeckt sind. Für die fünfte Frachtfördereinrichtung 140 und die achte Frachtfördereinrichtung 170 ergibt sich lediglich eine teilweise Überdeckung. Alle anderen Frachtfördereinrichtungen 100, 120, 130, 180, 190 werden von dem Frachtcontainer 30 nicht verdeckt. Anhand der Sensoreinrichtungen 104a, 104b, 104c, 104d lässt sich diese zweite Position des Frachtcontainers 30 ebenfalls ermitteln. Erfindungsgemäß speichert die Steuereinrichtung 20 entsprechende Positionsdaten in einer Speichereinrichtung 21 und ermittelt anhand der gespeicherten Informationen die Bewegung des Frachtcontainers 30 auf dem Frachtdeck 10. Für den hier tätigen Fachmann sollte es offensichtlich sein, dass die Steuereinrichtung 20 eine Vielzahl von Signalen empfangen kann, um eine wesentlich detailliertere Modellierung der Bewegung des Frachtcontainers 30 vorzunehmen. Eine Abfrage der Sensoreinrichtungen 104a, 104b, 104c, 104d erfolgt zumindest mit einem Hertz, vorzugsweise mit 10 Hertz oder 100 Hertz, so dass sich eine sehr genaue Positionsermittlung und/oder Modellierung der Bewegungsabläufe erstellen lassen. Die Steuereinrichtung 20 nutzt nun diese Informationen, um die Frachtfördereinrichtungen 100, 110, 120, ..., 210 in geeigneter Weise einzustellen. So kann die Steuereinrichtung 20 ermitteln, dass sich der Frachtcontainer über der zweiten Frachtfördereinrichtung mit einer bestimmten Geschwindigkeit in eine bestimmte Richtung bewegt. In der Fig. 1 wird diese Relativbewegung r mit einem entsprechenden Vektorpfeil angegeben. Die Steuereinrichtung 20 kann nun die zweite Frachtfördereinrichtung 210 derart ausrichten (z.B. auf einen Null-Grad-Winkel), dass die Drehachse der Antriebsrollen 102a, 102b im Wesentlichen senkrecht zu dieser ermittelten Relativbewegung r steht, so dass ein effektiver Antrieb des Frachtcontainers 30 bei minimalem Verschleiß ermöglicht wird. Des Weiteren können Frachtfördereinrichtungen 100, 110, 120, ..., 210, die noch nicht von dem Frachtcontainer 30 überdeckt werden, bereits so angesteuert werden, dass sie sobald sie überdeckt werden, bereits in geeigneter Weise ausgerichtet sind.

Des Weiteren können die gewonnenen Informationen bezüglich der Bewegung des Frachtcontainers 30 dazu verwendet werden, um diesen halb- oder vollautomatisch in eine gewünschte Position beispielsweise in die Frachtladebahn B zu transportieren. So kann ein Benutzer des erfindungsgemäßen Frachtladesystems, beispielsweise über eine Eingabeeinrichtung 24, eine gewünschte Position für den Frachtcontainer 30 eingeben. Die Steuereinrichtung 20 kennt also eine Ist-Position und eine Ziel-Position und kann eine entsprechende Förderstrategie entwickeln, um den Frachtcontainer 30 aus der Ist-Position in die Ziel-Position zu fördern. So kann die Steuereinrichtung 20 zu dem Ergebnis kommen, dass der Frachtcontainer 30 aus der zweiten Position gemäß dem zweiten Frachtbodenumriss 33' im Uhrzeigersinn gedreht werden muss, um diesen in der Frachtladebahn B zu parken. Die Steuereinrichtung 20 kann also für jede Frachtfördereinrichtung 100, 110, 120, ..., 210, die von dem Frachtcontainer 30 überdeckt wird, eine Soll-Förderrichtung s ermitteln und diese Soll-Förderrichtung bei der Steuerung der Frachtfördereinrichtung 100, 110, 120, ..., 210 berücksichtigen. In der Fig. 1 ist die Soll-Förderrichtung s durch einen entsprechenden Vektorpfeil symbolisiert. Es wäre also möglich, den Frachtcontainer 30 zu stoppen, die zweite Frachtfördereinrichtung und alle weiteren betroffenen Frachtfördereinrichtungen in geeigneter Weise auszurichten und den Frachtcontainer 30 dann in eine entsprechende Richtungen weiterzutransportieren. Vorzugsweise erfolgt jedoch eine quasi kontinuierliche Förderung des Frachtcontainers 30, so dass ein Abstoppen des Frachtcontainers 30 für eine Richtungsänderung nicht notwendig ist. Die Steuereinrichtung 20 ermittelt also zu einem gegebenen Zeitpunkt die Relativbewegung r für eine bestimmte Frachtfördereinrichtung, beispielsweise für die zweite Frachtfördereinrichtung 110, und eine korrespondierende Soll-Förderrichtung s. Anhand dieser Werte wird eine Einstellung der Frachtfördereinrichtungen 100, 110, 120, ..., 210 ermittelt, die eine geeignete Kurskorrektur einleitet. Insofern wird der Frachtcontainer 30 kontinuierlich in die Frachtladebahn B eingeschwenkt, wobei nur ein sehr geringer Verschleiß an den Frachtfördereinrichtungen 100, 110, 120, ..., 210 auftritt.

In einem bevorzugten Ausführungsbeispiel wird die beschriebene Konfiguration des Frachtdecks 10 mit den Sensoreinrichtungen 104a, 104b, 104c, 104d der jeweiligen Frachtfördereinrichtungen 100, 110, 120, ..., 210 dazu verwendet, um ein virtuelles Abbild des Frachtbodens 31 des Frachtcontainers zu erstellen und dieses virtuelle Abbild mit hinterlegten zweidimensionalen oder dreidimensionalen Modellen des Frachtraums zu vergleichen, um sodann die Frachtfördereinrichtungen 100, 110, 120, ..., 210, insbesondere die jeweiligen Rotationsteller 103, rechnerisch so zu steuern (Drehrichtung der Antriebsrollen 102a, 102b, Ausrichtung der Rotationsteller 103), dass es möglich ist, den Frachtcontainer 30 halb- oder vollautomatisch in den Frachtraum zu drehen. Vorzugsweise erfolgt eine quasi kontinuierliche Steuerung der einzelnen Frachtfördereinrichtungen 100, 110, 120, ..., 210, wobei deren Einstellung, insbesondere die Ausrichtung der Rotationsteller 103 während des Bewegens des Frachtcontainers 30 nachgeregelt wird, um eine möglichst tangentiale Bewegung des Frachtbodens 31 über die Antriebsrollen 102a, 102b zu erhalten. Hierdurch lässt sich ein unnötiger Verschleiß vermeiden.

Es ist möglich, ein zweidimensionales oder dreidimensionales Modell des zu ladenden Frachtcontainers 30 aufgrund von manuellen Eingaben zu ermitteln. So kann das erfindungsgemäße Frachtladesystem beispielsweise in der Speichereinrichtung 21 zwei- oder dreidimensionale Modelle sämtlicher gängigen Frachtcontainermodelle gespeichert haben. Dem Benutzer des erfindungsgemäßen Frachtladesystems ist es möglich, den entsprechenden Frachtcontainer 30 auszuwählen. Andererseits kann eine automatische Erfassung des Frachtcontainermodells erfolgen. Mit dem erfindungsgemäßen Frachtladesystem ist es sogar möglich, Frachtcontainer 30 mit Überhang zu verladen. Beispielsweise können entsprechende Daten, die zur Erstellung eines zwei- oder dreidimensionalen Modells des Frachtcontainers mit Überhang geeignet sind, auf dem bereits genannten RFID-Tag 34 gespeichert werden. Die Steuereinrichtung 20 kann anhand der Modelle des Frachtraums und der Frachtcontainer 30 einen optimalen Steuerplan ermitteln, so dass es zu keiner Kollision des Frachtcontainers 30 mit dem Flugzeug, insbesondere dessen Außenhaut, kommt.

Bei der Ausarbeitung einer geeigneten Steuerstrategie werden vorzugsweise entsprechende Fixpunkte angefahren, so dass die Position und die Bewegung des Frachtstücks mit hoher Genauigkeit ermittelt werden können. Beispielsweise kann der Frachtcontainer 30 vor einem Einfahren in die Frachtladebahn B komplett an Funktionselementen, die entlang der rechten Seitenwand 2 gegenüber der Türöffnung 7 angeordnet sind, ausgerichtet werden.

Obwohl in dem vorab beschriebenen Ausführungsbeispiel die Sensoreinrichtungen 104a, 104b, 104c, 104d an den Frachtfördereinrichtungen 100, 110, 120, ..., 210 angeordnet sind, wäre es auch möglich, einen Teil dieser oder alle getrennt von den Frachtfördereinrichtungen 100, 110, 120, ..., 210 vorzusehen. Insofern ließe sich ein von den Frachtfördereinrichtungen 100, 110, 120, ..., 210 völlig unabhängiges Netz oder Gitter von Sensoreinrichtungen 104a, 104b, 104c, 104d ausgestalten.

Obwohl die Erfindung in der vorhergehenden Beschreibung anhand eines Frachtdecks eines Flugzeugs erläutert wurde, kann diese in Verbindung mit jedem beliebigen Frachtdeck, z.B. auch in einem Logistikzentrum, eingesetzt werden.

### Bezugszeichenliste

- 1,2: Seitenwand
- 5: Mittelebene
- 7: Türöffnung
- 10: Frachtdeck
- 11, 11', 11", 11'": Mittelriegel
- 20: Steuereinrichtung
- 21: Speichereinrichtung
- 22: Modellgenerator
- 24: Eingabeeinrichtung
- 25: RFID-Sensoreinrichtung
- 30: Frachtcontainer
- 31: Frachtboden
- 33, 33': Frachtbodenumrisse
- 34: RFID-Tag
- 100, 110, 120, ..., 210: Frachtfördereinrichtungen
- 101: Rollenantriebseinheit
- 102a, 102b: Antriebsrollen
- 103: Rotationsteller
- 104a, 104b, 104c, 104d: Sensoreinrichtungen
- 105: Rahmen
- 106: Rotationsachse
- X, Y, Z: x-Richtung, y-Richtung bzw. z-Richtung
- A: Frachtladebahn A
- B: Frachtladebahn B
- r: Relativbewegung
- s: Soll-Förderrichtung
- f1, f2: Förderrichtungen
- b: Frachtcontainerbreite
- l: Frachtcontainerlänge
- 102a, 102b: Antriebsrollen
- 103: Rotationsteller
- 104a, 104b, 104c, 104d: Sensoreinrichtungen
- 105: Rahmen
- 106: Rotationsachse
- X, Y, Z: x-Richtung, y-Richtung bzw. z-Richtung
- A: Frachtladebahn A
- B: Frachtladebahn B
- r: Relativbewegung
- s: Soll-Förderrichtung
- f1, f2: Förderrichtungen
- b: Frachtcontainerbreite
- l: Frachtcontainerlänge

## Patentansprüche

1. Frachtladesystem für das Be- und Entladen eines Frachtdecks (10), umfassend:
- eine Vielzahl von Frachtfördereinrichtungen (100, 110,..., 210) mit jeweils mindestens einer Rolle (102a, 102b) zum Fördern von Frachtstücken (30) in eine Förderrichtung (f1, f2) und mit jeweils mindestens einem Sensor (104a, 104b, 104c, 104d) zum Erfassen der Anwesenheit eines Frachtstücks, wobei die Rollen (102a, 102b) mindestens einer ersten Frachtfördereinrichtung (110, 120,..., 210) derart drehbeweglich gelagert sind, dass die Förderrichtung (f1, f2) der ersten Frachtfördereinrichtung (110, 120,..., 210) einstellbar ist,
- eine Steuerung (20) die Signale von Sensoren (104a, 104b, 104c, 104d) von mindestens zwei Frachtfördereinrichtungen (100, 110,..., 210) empfängt, um eine Bewegung eines Frachtstücks (30) zu erfassen,
**dadurch gekennzeichnet, dass**
die Steuerung (20) dazu ausgebildet ist, anhand der Signale eine Relativbewegung (r) eines Abschnitts des Frachtstücks (30) relativ zu der ersten Frachtfördereinrichtung (100, 110,..., 210) zu berechnen und die mindestens eine Rolle (102a, 102b) der ersten Frachtfördereinrichtung (100, 110,..., 210) unter Berücksichtigung der Relativbewegung (r) des Abschnitts des Frachtstücks (30) auszurichten,
wobei zumindest eine Teilmenge der Sensoren (104a, 104b, 104c, 104d) und/oder Vielzahl von Frachtfördereinrichtungen (100, 110,..., 210) in einem das Frachtdeck (10) in seiner Breite überspannenden Raster im Be- und Entladebereich des Frachtdeckes (10) angeordnet sind.

2. Frachtladesystem nach Anspruch 1,
**dadurch gekennzeichnet, dass**
die Steuerung (20) dazu ausgebildet ist, die erste Frachtfördereinrichtung auszurichten, während die Rolle (102a, 102b) kraftschlüssig an einem Abschnitt des Frachtstücks (30) anliegt, um das Frachtstück (30) anzutreiben.

3. Frachtladesystem nach einem der vorhergehenden Ansprüche,
**dadurch gekennzeichnet, dass**
die Steuerung (20) eine Speichereinrichtung (21) umfasst, die Daten bezüglich der Positionen der Sensoren (104a, 104b, 104c, 104d) zueinander und/oder auf dem Frachtdeck (10) speichert, wobei die Steuerung (20) dazu ausgebildet ist, die Relativbewegung (r) des Abschnitts des Frachtstücks (30) unter Verwendung der Daten der Speichereinrichtung (21) zu berechnen.

4. Frachtladesystem nach einem der vorhergehenden Ansprüche,
**dadurch gekennzeichnet, dass**
die Steuerung (20) dazu ausgebildet ist, eine Abmessung einer Bodenfläche des Frachtstücks (30) zu erfassen und für eine Bestimmung einer Position des Frachtstücks (30) und/oder der Relativbewegung (r) des Abschnitts des Frachtstücks (30) zu verarbeiten.

5. Frachtladesystem nach einem der vorhergehenden Ansprüche,
**dadurch gekennzeichnet, dass**
die Sensoren (104a, 104b, 104c, 104d) Lichtsensoren umfassen, die derart am Frachtdeck (10) angeordnet und ausgebildet sind, dass sie zumindest das Vorhandensein eines Frachtstücks (30) unmittelbar über dem Lichtsensor erfassen.

6. Frachtladesystem nach einem der vorhergehenden Ansprüche,
**dadurch gekennzeichnet, dass**
zumindest eine Teilmenge der Frachtfördereinrichtungen (100, 110,..., 210) jeweils mindestens vier Sensoren umfasst, die statisch relativ zum Frachtdeck (10), nämlich an einem Rahmen der Frachtfördereinrichtungen (100, 110,..., 210) angeordnet sind.

7. Frachtladesystem nach Anspruch 6,
**dadurch gekennzeichnet, dass**
die Sensoren (104a, 104b, 104c, 104d) an der jeweiligen Frachtfördereinrichtung (100, 110,..., 210) die mindestens eine Rolle (102a, 102b) umgebend angeordnet sind.

8. Frachtladesystem nach einem der vorhergehenden Ansprüche,
**dadurch gekennzeichnet, dass**
die Signale ein binäres Überdeckungsmuster angeben.

9. Frachtladesystem nach einem der vorhergehenden Ansprüche,
**dadurch gekennzeichnet, dass**
die erste Frachtfördereinrichtung (100, 110,..., 210) mindestens einen Drehteller (103) umfasst, der um eine Vertikalachse (106) drehbar in einem Rahmen (105) angeordnet ist und die mindestens eine Rolle (102a, 102b) beherbergt, um die Rolle (102a, 102b) zur Förderung des Frachtstückes (30) in eine vorgegebene Förderrichtung (f1, f2) einzustellen.

10. Frachtladesystem nach einem der vorhergehenden Ansprüche,
**gekennzeichnet durch**
eine Leseeinrichtung zum Erfassen der Frachtstückart und/oder mindestens einer Abmessung des Frachtstücks (30).

11. Frachtladesystem nach einem der vorhergehenden Ansprüche,
**dadurch gekennzeichnet, dass**
die Steuerung (20) einen Modellgenerator (22) umfasst, um ein zumindest zweidimensionales Modell des Frachtstücks (30) und/oder zumindest eines Teils des Frachtraums des Flugzeugs zu erstellen.

12. Frachtladesystem nach einem der vorhergehenden Ansprüche,
**dadurch gekennzeichnet, dass**
die Steuerung (20) eine Positionsspeichereinrichtung umfasst, um Positionsdaten in einer zeitlichen Abfolge zu speichern, die Positionen des Frachtstücks (30) auf dem Frachtdeck (10) angeben, wobei die Steuerung (20) dazu ausgebildet ist, anhand einer ermittelten Istposition und der gespeicherten Positionsdaten aus der Positionsspeichereinrichtung die Bewegung des Frachtstücks (30) zu ermitteln.

13. Frachtladesystem nach einem der vorhergehenden Ansprüche,
**dadurch gekennzeichnet, dass**
die Steuerung (20) dazu ausgebildet ist, eine Sollposition und eine Istposition des Frachtstücks (30) zu ermitteln und mindestens eine Frachtfördereinrichtung (110, 120,..., 210) derart anzusteuern, dass das Frachtstück (30) aus der Istposition in die Sollposition gefördert wird.

14. Frachtladesystem nach Anspruch 13,
**dadurch gekennzeichnet, dass**
die Steuerung (20) dazu ausgebildet ist, anhand der Istposition und der Sollposition eine Sollförderrichtung (s) für mindestens eine Frachtfördereinrichtung (100, 110,..., 210) zu ermitteln.

15. Frachtladesystem nach Anspruch 14,
**dadurch gekennzeichnet, dass**
die Steuerung (20) dazu ausgebildet ist, unter Berücksichtigung der Relativbewegung (r) eine Optimalförderrichtung für mindestens eine Frachtfördereinrichtung (100, 110,..., 210), zu ermitteln, wobei beim Einnehmen der Optimalförderrichtung die Achse der Rolle der jeweiligen Frachtfördereinrichtung (100, 110,..., 210) im Wesentlichen senkrecht zur Relativbewegung (r) des auf der Rolle aufliegenden Frachtstücks verläuft.

16. Frachtladesystem nach Anspruch 15,
**dadurch gekennzeichnet, dass**
die Steuerung (20) dazu ausgebildet ist, eine Stellförderrichtung aus der Optimalförderrichtung und der Sollförderrichtung (s) zu berechnen und die mindestens eine Frachtfördereinrichtung (100, 110,..., 210) gemäß der Optimalförderrichtung auszurichten.

17. Frachtladesystem nach Anspruch 13 oder 14,
**dadurch gekennzeichnet, dass**
die Steuerung (20) dazu ausgebildet ist,
- die Relativbewegung (r) des Frachtstücks (30) nahe bei oder an der Position, an der die mindestens eine Rolle (102a, 102b) der mindestens einen Frachtfördereinrichtung (100, 110,..., 210) angreift, und eine Sollförderrichtung (s) in Echtzeit zu ermitteln und
- die Rolle (102a, 102b) unter Berücksichtigung der Relativbewegung (r) des Frachtstücks (30) und der Sollförderrichtung (s) auszurichten.

18. Verfahren zur Ermittlung einer Bewegung eines Frachtstücks auf einem Frachtdeck (10) und zur Ausrichtung mindestens einer Frachtfördereinrichtung (100, 110,..., 210), wobei auf dem Frachtdeck (10) zumindest eine Teilmenge von Sensoren (104a, 104b, 104c, 104d) und/oder eine Vielzahl von Frachtfördereinrichtungen (100, 110,..., 210) in einem das Frachtdeck (10) in seiner Breite überspannenden Raster im Be- und Entladebereich des Frachtdeckes (10) angeordnet sind, wobei das Verfahren die Schritte umfasst:
- Bestimmen der Abmessungen und/oder Ausgestaltung einer Bodenfläche (31) des Frachtstücks (30) durch eine Steuerung (20);
- Empfangen einer Vielzahl von ersten Signalen von den Sensoren (104a, 104b, 104c, 104d), die zumindest über einen Abschnitt des Frachtdecks (10) verteilt angeordnet sind, wobei die ersten Signale eine Verdeckung durch das Frachtstück (30) zu einem ersten Zeitpunkt angeben;
- Berechnen einer ersten Position des Frachtstücks (30) anhand der ersten Signale unter Berücksichtigung der Abmessung und/oder Ausgestaltung zumindest der Bodenfläche durch die Steuerung (20);
- Speichern der ersten Position des Frachtstücks (30) in einem Speicher (21);
- Empfangen einer Vielzahl von zweiten Signalen von den Sensoren (104a, 104b, 104c, 104d) zu einem zweiten Zeitpunkt;
- Berechnen einer zweiten Position des Frachtstücks (30) anhand der zweiten Signale unter Berücksichtigung der Abmessung und/oder Ausgestaltung der Bodenfläche (31) durch die Steuerung (20);
- Berechnen der Bewegung des Frachtstücks (30) durch das Vergleichen der ersten Position des Frachtstücks (30) mit der zweiten Position, wobei anhand der Signale eine Relativbewegung (r) eines Abschnitts des Frachtstücks (30) relativ zu der mindestens einen Frachtfördereinrichtung (100, 110,..., 210) berechnet und mindestens eine Rolle (102a, 102b) der mindestens einen Frachtfördereinrichtung (100, 110,..., 210) unter Berücksichtigung der Relativbewegung (r) des Abschnitts des Frachtstücks (30) ausgerichtet wird.

19. Verfahren nach Anspruch 18,
**gekennzeichnet durch**
ein Auslesen eines am Frachtstück (30) angebrachten Speichers, nämlich eines RFID-Chips (34), mittels einer Leseeinrichtung (25) zur Bestimmung der Abmessung und/oder Ausgestaltung zumindest der Bodenfläche des Frachtstückes.

## Claims

1. Freight loading system for loading and unloading a cargo deck (10), comprising:
- a multiplicity of freight transport devices (100, 110, ..., 210) each with at least one roller (102a, 102b) for transporting freight items (30) in a transport direction (f1, f2) and each with at least one sensor (104a, 104b, 104c, 104d) for detecting the presence of a freight item, wherein the rollers (102a, 102b) of at least one first freight transport device (110, 120, ..., 210) are rotatably mounted such that the transport direction (f1, f2) of the first freight transport device (110, 120, ..., 210) is adjustable,
- a control unit (20) which receives signals from the sensors (104a, 104b, 104c, 104d) of at least two freight transport devices (100, 110, ..., 210) in order to detect a movement of a freight item (30),
**characterized in that**
the control unit (20) is designed to calculate, by means of the signals, a relative movement (r) of a portion of the freight item (30) relative to the first freight transport device (100, 110, ..., 210) and to align the at least one roller (102a, 102b) of the first freight transport device (100, 110, ..., 210) taking into account the relative movement (r) of the portion of the freight item (30),
wherein at least a subset of the sensors (104a, 104b, 104c, 104d) and/or a multiplicity of freight transport devices (100, 110, ..., 210) are disposed in the loading and unloading area of the cargo deck (10) in a grid spanning the cargo deck (10) in its width.

2. Freight loading system according to claim 1,
**characterized in that**
the control unit (20) is designed to align the first freight transport device while the roller (102a, 102b) lies by force fit against a portion of the freight item (30) in order to drive the freight item (30).

3. Freight loading system according to anyone of the preceding claims,
**characterized in that**
the control unit (20) comprises a memory device (21) which stores data relating to the positions of the sensors (104a, 104b, 104c, 104d) relative to each other and/or on the cargo deck (10), wherein the control unit (20) is designed to calculate the relative movement (r) of the portion of the freight item (30) using the data from the memory device (21).

4. Freight loading system according to anyone of the preceding claims,
**characterized in that**
the control unit (20) is designed to detect a dimension of a base surface of the freight item (30) and process this to determine a position of the freight item (30) and/or a relative movement (r) of the portion of the freight item (30).

5. Freight loading system according to anyone of the preceding claims,
**characterized in that**
the sensors (104a, 104b, 104c, 104d) comprise light sensors arranged on the cargo deck (10) and designed such that they detect at least the presence of a freight item (30) immediately above the light sensor.

6. Freight loading system according to anyone of the preceding claims,
**characterized in that**
at least a subset of the freight transport devices (100, 110, ..., 210) comprises in each case at least four sensors arranged static relative to the cargo deck (10), namely on a frame of the freight transport devices (100, 110, ..., 210).

7. Freight loading system according to claim 6,
**characterized in that**
the sensors (104a, 104b, 104c, 104d) are arranged on the respective freight transport device (100, 110, ..., 210) so as to surround the at least one roller (102a, 102b).

8. Freight loading system according to anyone of the preceding claims,
**characterized in that**
the signals indicate a binary overlapping pattern.

9. Freight loading system according to anyone of the preceding claims,
**characterized in that**
the first freight transport device (100, 110, ..., 210) comprises at least one rotary table (103) arranged in a frame (105) so as to be rotatable about a vertical axis (106) and which accommodates the at least one roller (102a, 102b) in order to set the roller (102a, 102b) to transport the freight item (30) in a predefined transport direction (f1, f2).

10. Freight loading system according to anyone of the preceding claims,
**characterized by**
a reading device for detecting the freight item type and/or at least one dimension of the freight item (30).

11. Freight loading system according to anyone of the preceding claims,
**characterized in that**
the control unit (20) comprises a model generator (22) for producing an at least two-dimensional model of the freight item (30) and/or at least a part of the cargo hold of the aircraft.

12. Freight loading system according to anyone of the preceding claims,
**characterized in that**
the control unit (20) comprises a position storing device for storing position data in a temporal sequence indicating the positions of the freight item (30) on the cargo deck (10), wherein the control unit (20) is configured to determine the movement of the freight item (30) by means of the determined actual position and the stored position data from the position storing device.

13. Freight loading system according to anyone of the preceding claims,
**characterized in that**
the control unit (20) is designed to determine a target position and an actual position of the freight item (30) and to control at least one freight transport device (110, 120, ..., 210) such that the freight item (30) is transported from the actual position to the target position.

14. Freight loading system according to claim 13,
**characterized in that**
the control unit (20) is designed to determine a target transport direction (s) for at least one freight transport device (100, 110, ..., 210) by means of the actual position and the target position.

15. Freight loading system according to claim 14,
**characterized in that**
the control unit (20) is designed to determine an optimum transport direction for at least one freight transport device (100, 110, ..., 210) taking into account the relative movement (r), wherein, when assuming the optimum transport direction, the axis of the roller of the respective freight transport device (100, 110, ..., 210) extends substantially perpendicular to the relative movement (r) of the freight item resting upon the roller.

16. Freight loading system according to claim 15,
**characterized in that**
the control unit (20) is designed to calculate a set transport direction from the optimum transport direction and the target transport direction (s), and to align the at least one freight transport device (100, 110, ..., 210) according to the optimum transport direction.

17. Freight loading system according to claim 13 or 14,
**characterized in that**
the control unit (20) is designed to
- determine the relative movement (r) of the freight item (30) in real time close to or at the position at which the at least one roller (102a, 102b) of the at least one freight transport device (100, 110, ..., 210) makes contact, and a target transport direction (s), and
- align the roller (102a, 102b) taking into account the relative movement (r) of the freight item (30) and the target transport direction (s).

18. Method for determining a movement of a freight item on a cargo deck (10) and for aligning at least one freight transport device (100, 110, ..., 210), wherein on the cargo deck (10) at least a subset of sensors (104a, 104b, 104c, 104d) and/or a multiplicity of freight transport devices (100, 110, ..., 210) are disposed in the loading and unloading area of the cargo deck (10) in a matrix spanning the cargo deck (10) in its width, wherein the method comprises the steps of:
- determining the dimensions and/or shape of a base surface (31) of the freight item (30) by a control unit (20);
- receiving a multiplicity of first signals from the sensors (104a, 104b, 104c, 104d) which are distributed over at least a portion of the cargo deck (10), wherein the first signals indicate a masking by the freight item (30) at a first time;
- calculating a first position of the freight item (30) by means of the first signals taking into account the dimension and/or design of at least the base surface, by the control unit (20);
- storing the first position of the freight item (30) in a memory (21);
- receiving a multiplicity of second signals from the sensors (104a, 104b, 104c, 104d) at a second time;
- calculating a second position of the freight item (30) by means of the second signals taking into account the dimension and/or design of the base surface (31), by the control unit (20);
- calculating the movement of the freight item (30) by comparing the first position of the freight item (30) to the second position, wherein by means of the signals, a relative movement (r) of a portion of the freight item (30) relative to the at least one freight transport device (100, 110, ..., 210) is calculated and at least one roller (102a, 102b) of the at least one freight transport device (100, 110, ..., 210) is aligned taking into account the relative movement (r) of the portion of the freight item (30).

19. Method according to claim 18,
**characterized by**
reading out a memory attached to the freight item (30), namely an RFID chip (34), by means of a reading device (25) to determine the dimension and/or shape of the at least one base surface of the freight item.

## Revendications

1. Système de chargement de fret pour le chargement et le déchargement d'un pont de fret (10), incluant :
- une pluralité de systèmes de convoyage de fret (100, 110, ..., 210) comportant chacun au moins un rouleau (102a, 102b) pour le convoyage de pièces de fret (30) dans une direction de convoyage (f1, f2) et comportant chacun au moins un capteur (104a, 104b, 104c, 104d) pour détecter la présence d'une pièce de fret, dans lequel les rouleaux (102a, 102b) d'au moins un système de convoyage de fret (110, 120, ..., 200) sont montés mobiles en rotation de telle façon que la direction de convoyage (f1, f2) du premier système de convoyage de fret (110, 120, ..., 210) est réglable,
- une commande (20) qui reçoit des signaux provenant des capteurs (104a, 104b, 104c, 104d) d'au moins deux systèmes de convoyage de fret (100, 110, ..., 210), afin d'appréhender un mouvement d'une pièce de fret (30),
**caractérisé en ce que**
la commande (20) est réalisée pour, au moyen des signaux, calculer un mouvement relatif (r) d'une portion de la pièce de fret (30) par rapport au premier système de convoyage de fret (100, 110, ..., 200) et pour orienter ledit au moins un rouleau (102a, 102b) du premier système de convoyage de fret (100, 110, ..., 200) en prenant en compte le mouvement relatif (r) de la portion de la pièce de fret (30),
dans lequel au moins un groupe partiel des capteurs (104a, 104b, 104c, 104d) et/ou une pluralité de systèmes de convoyage de fret (100, 110, ..., 200) sont agencés selon une trame qui couvre le pont de fret (10) dans sa largeur, dans la zone de chargement et de déchargement du pont de fret (10).

2. Système de chargement de fret selon la revendication 1,
**caractérisé en ce que** la commande (20) est réalisée pour orienter le premier système de convoyage de fret pendant que le rouleau (102a, 102b) est appliqué en coopération de forces contre une portion de la pièce de fret (30), afin d'entraîner la pièce de fret (30).

3. Système de chargement de fret selon l'une des revendications précédentes,
**caractérisé en ce que** la commande (20) inclut un moyen formant mémoire (21) qui mémorise des données concernant les positions des capteurs (104a, 104b, 104c, 104d) les uns par rapport aux autres et/ou sur le pont de fret (10), ladite commande (20) étant réalisée pour calculer le mouvement relatif (r) de la portion de la pièce de fret (30) en utilisant les données du moyen formant mémoire (21).

4. Système de chargement de fret selon l'une des revendications précédentes,
**caractérisé en ce que** la commande (20) est réalisée pour détecter une dimension d'une surface au sol de la pièce de fret (30) et pour la traiter pour une détermination d'une position de la pièce de fret (30) et/ou du mouvement relatif (r) de la portion de la pièce de fret (30).

5. Système de chargement de fret selon l'une des revendications précédentes,
**caractérisé en ce que** les capteurs (104a, 104b, 104c, 104d) incluent des capteurs de lumière, qui sont agencés sur le pont de fret (10) de telle façon et qui sont réalisés de telle manière qu'ils détectent au moins la présence d'une pièce de fret (30) indirectement via les capteurs de lumière.

6. Système de chargement de fret selon l'une des revendications précédentes,
**caractérisé en ce qu'**au moins un groupe partiel des systèmes de convoyage de fret (100, 110, ..., 200) incluent chacun au moins quatre capteurs, qui sont agencés de manière statique par rapport au pont de fret (10), à savoir sur un cadre des systèmes de convoyage de fret (100, 110, ..., 210).

7. Système de chargement de fret selon la revendication 6,
**caractérisé en ce que** les capteurs (104a, 104b, 104c, 104d) sont agencés au niveau du système de convoyage de fret (100, 110, ..., 200) respectif de façon à entourer ledit au moins un rouleau (102a, 102b).

8. Système de chargement de fret selon l'une des revendications précédentes,
**caractérisé en ce que** les signaux indiquent un motif de recouvrement binaire.

9. Système de chargement de fret selon l'une des revendications précédentes,
**caractérisé en ce que** le premier système de convoyage de fret (100, 110, ..., 200) inclut au moins un plateau rotatif (103), qui est agencé dans un cadre (105) avec faculté de rotation autour d'un axe vertical (106) et qui abrite ledit au moins un rouleau (102a, 102b), afin de régler le rouleau (102a, 102b) pour le convoyage de la pièce de fret (30) dans une direction de convoyage prédéterminée (f1, f2).

10. Système de chargement de fret selon l'une des revendications précédentes,
**caractérisé par** un moyen de lecture pour détecter le type de la pièce de fret et/ou au moins une dimension de la pièce de fret (30).

11. Système de chargement de fret selon l'une des revendications précédentes,
**caractérisé en ce que** la commande (20) inclut un générateur de modèle (22), pour établir un modèle au moins bidimensionnel de la pièce de fret (30) et/ou d'au moins une partie de la soute à fret de l'avion.

12. Système de chargement de fret selon l'une des revendications précédentes,
**caractérisé en ce que** la commande (20) inclut un moyen de mémorisation de position, afin de mémoriser des données de position dans une succession temporelle, qui indiquent des positions de la pièce de fret (30) sur le pont de fret (10), ladite commande (20) étant réalisée pour déterminer, au moyen d'une position réelle déterminée et des données de position mémorisées provenant du moyen de mémorisation de position, le mouvement de la pièce de fret (30).

13. Système de chargement de fret selon l'une des revendications précédentes,
**caractérisé en ce que** la commande (20) est réalisée pour déterminer une position de consigne et une position réelle de la pièce de fret (30) et pour piloter au moins un système de convoyage de fret (110, 120, ..., 200) de telle manière que la pièce de fret (30) est convoyée depuis la position réelle jusque dans la position de consigne.

14. Système de chargement de fret selon la revendication 13,
**caractérisé en ce que** la commande (20) est réalisée pour déterminer, au moyen de la position réelle et de la position de consigne, une direction de convoyage de consigne (s) pour au moins un système de convoyage de fret (100, 110, ..., 210).

15. Système de chargement de fret selon la revendication 14,
**caractérisé en ce que** la commande (20) est réalisée pour déterminer, en tenant compte du mouvement relatif (r), une direction de convoyage optimale pour au moins un système de convoyage de fret (100, 110, ..., 200), et lorsqu'il adopte la direction de convoyage optimale, l'axe du rouleau du système de convoyage de fret (100, 110, ..., 200) respectif s'étend sensiblement perpendiculairement au mouvement relatif (r) de la pièce de fret reposant sur le rouleau.

16. Système de chargement de fret selon la revendication 15,
**caractérisé en ce que** la commande (20) est réalisée pour calculer, à partir de la direction de convoyage optimale et de la direction de convoyage de consigne (s), une direction de convoyage de positionnement, et pour orienter ledit au moins un système de convoyage de fret (100, 110, ..., 200) d'après la direction de convoyage optimale.

17. Système de chargement de fret selon la revendication 13 ou 14, **caractérisé en ce que** la commande (20) est réalisée pour :
- déterminer en temps réel le mouvement relatif (r) de la pièce de fret (30) au voisinage de ou à la position, à laquelle ledit au moins un rouleau (102a, 102b) dudit au moins un système de convoyage de fret (100, 110, ..., 200) du système de convoyage de fret (100, 110, ..., 200) vient en engagement, et pour déterminer une direction de convoyage de consigne (s), et
- orienter le rouleau (102a, 102b) en tenant compte du mouvement relatif (r) de la pièce de fret (30) et de la direction de convoyage de consigne (s).

18. Procédé pour déterminer un mouvement d'une pièce de fret sur un pont de fret (10) et pour orienter au moins un système de convoyage de fret (100, 110, ..., 200), dans lequel au moins un groupe partiel de capteurs (104a, 104b, 104c, 104d) et/ou une pluralité de systèmes de convoyage de fret (100, 110, ..., 210) sont agencés sur le pont de fret (10) suivant une trame qui coiffe le pont de tête (10) dans sa largeur, dans la zone de chargement et de déchargement du pont de fret (10), le procédé incluant les étapes consistant à :
- déterminer les dimensions et/ou la configuration d'une surface au sol (31) de la pièce de fret (30) au moyen d'une commande (20) ;
- recevoir une pluralité de premiers signaux provenant des capteurs (104a, 104b, 104c, 104d), qui sont agencés de façon répartie au moins sur une portion du pont de fret (10), lesdits premiers signaux indiquant une couverture par la pièce de fret (30) à un premier instant ;
- calculer une première position de la pièce de fret (30) au moyen des premiers signaux en tenant compte de la dimension et/ou de la configuration de la surface au sol au moins, au moyen de la commande (20) ;
- mémoriser la première position de la pièce de fret (30) dans une mémoire (21) ;
- recevoir une pluralité de seconds signaux provenant des capteurs (104a, 104b, 104c, 104d) à un second instant ;
- calculer une seconde position de la pièce de fret (30) au moyen des seconds signaux en tenant compte de la dimension et/ou de la configuration de la surface au sol (30), au moyen de la commande (20) ;
calculer le mouvement de la pièce de fret (30) en comparant la première position de la pièce de fret (30) à la seconde position, et au moyen des signaux on calcule un mouvement relatif (r) d'une portion de la pièce de fret (30) par rapport audit au moins un système de convoyage de fret (100, 110, ..., 200), et on oriente au moins un rouleau (102a, 102b) dudit au moins un système de convoyage de fret (100, 110, ..., 200) en tenant compte du mouvement relatif (r) de la portion de la pièce de fret (30).

19. Procédé selon la revendication 18,
**caractérisé par**
une opération de lecture d'une mémoire appliquée sur la pièce de fret (30), à savoir d'une puce RFID (34), au moyen d'un système de lecture (25) pour la détermination de la dimension et/ou de la configuration au moins de la surface au sol de la pièce de fret.
